# EUROPEAN PATENT SPECIFICATION

(11) **EP 2 070 407 B1**
(45) Date of publication and mention of the grant of the patent: **06.04.2011**
(21) Application number: 08021255.8
(22) Date of filing: 08.12.2008
(51) Int. Cl.: A01G 9/12, A01G 13/02

(54) **Method and tubular body for raising plants**
Verfahren und röhrenförmiger Körper zum Züchten von Pflanzen
Procédé et corps tubulaire pour cultiver des plantes

(30) Priority: 11.12.2007 NL 1034811
(43) Date of publication of application: 17.06.2009
(73) Proprietor: A.J.M. de Koning Beheer B.V., 2631 NA NOOTDORP (NL); TER LAAK BEHEER B.V., 2291 HM WATERINGEN (NL)
(72) Inventor: De Koning, Adrianus Johannes Maria, 2631 NA NOOTDORP (NL); Ter Laak, Eduardus Walterus, 2635 CW DEN HOORN (NL); Ter Laak, Richard Johannes, 2291 HM WATERINGEN (NL)
(74) Representative: Dohmen, Johannes Maria Gerardus

(56) References cited:
- EP-A- 1 216 611
- DE-C1- 3 739 947
- NL-C2- 1 031 049
- US-A1- 2003 041 576

## Description

The invention relates to a method for raising plants rooted in a ball of cultivating material.

Plants are usually raised together in large numbers, each plant being rooted in a ball of cultivating material, which is usually contained In a pot. The plants are generally spaced close together. A problem that occurs in such a situation is that branches and leaves of plants adjacent to each other may become intertwined, which makes it difficult to separate the plants and which may lead to branches and leaves being damaged and/or breaking off, which has an adverse effect on the plant quality.

Dutch patent application NL 1031049 discloses an annular attachment to be attached to a pad in which a plant is raised. The annular attachment In use surrounds branches and leaves of the plant, at least partially, reducing the risk that branches and leaves of adjacent plants can become intertwinnend. However, the annular attachment can adversely effect the structure of the leaves.

The object of the invention is to provide a method for raising plants which obviates this drawback of the usual method.

According to the invention, this object can be accomplished in that a tubular body is placed round the plant, the surface facing the plant of which tubular body Is provided with guide surfaces, which guide surfaces extend at least substantially in vertical direction in the position of use of the tubular body and which, seen In cross-sectional view of the tubular body, Include an angle with a line that envelopes the outer side of the tubular body.

When this method is used, the branches of the plant, for example of orchids, will be trained vertically upwards by the guide surfaces and cannot intertwine with branches of adjacent plants. Also the leaves of the plants surrounded by the tubular body can be supported on the edges of the guide surfaces without abutting against a wall part of the tubular body over a large part of their surface area, so that the structure of the leaves is not adversely affected.

The term "enveloping line" is to be understood to mean a line which extends along the outer parts of the tubular body. As will become clear below, the tubular body may or may not have a smooth circumference.

Another aspect of the invention relates to a tubular body intended for use in raising plants.

According to the Invention, the tubular body is provided with guide surfaces, which extend at least substantially parallel to the longitudinal axis of the tubular body, and which, seen in cross-sectional view of the tubular body, include an angle with a line that envelopes an outer side of the tubular body.

When such tubular bodies are used for surrounding plants, branches and the like of plants will be trained upwards in a desired direction, and contact between branches and leaves of plants adjacent to each other will be prevented.

The invention will be explained in more detail below with reference to a few possible embodiments, which are schematically shown in the appended figures.
Figure 1 shows a tubular body, which surrounds a plant contained in a pot.
Figure 2 is a top plan view of the tubular body shown in figure 1.
Figures 3 and 4 are top plan views of other possible embodiments of a tubular body according to the invention.
Figure 5 shows a container for accommodating a tubular body (not shown).
Figure 6 shows a second embodiment of a container.
Figure 7 is a sectional view of part of a blank.
Figure 8 shows another embodiment of a tubular body.
Figure 9 shows another embodiment of a container.

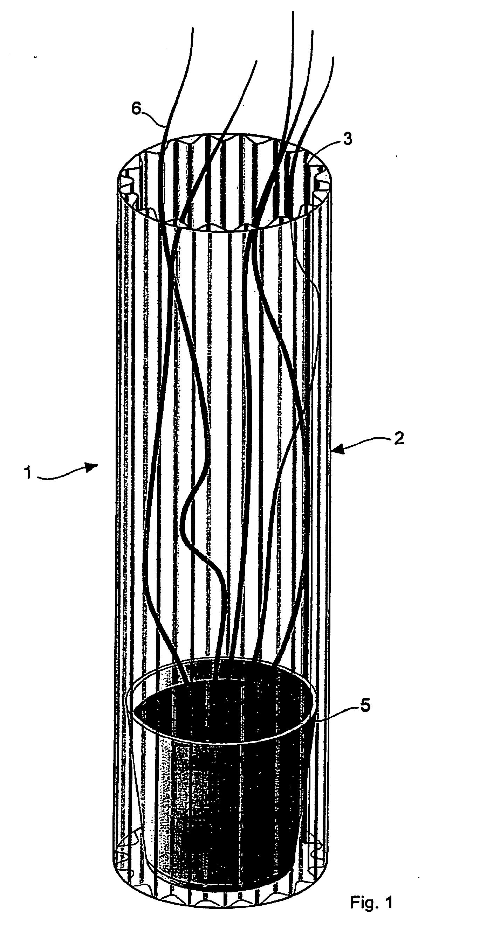

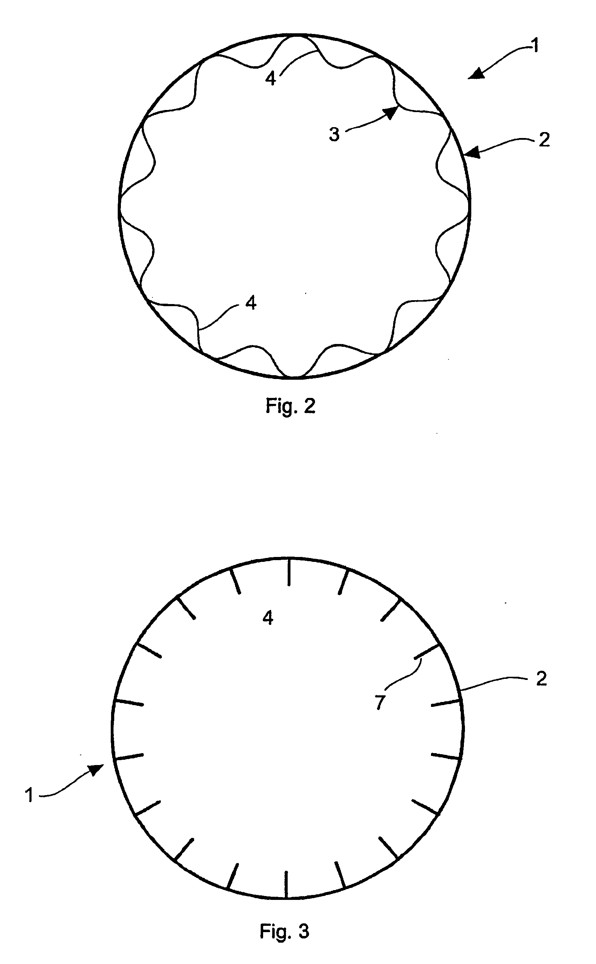

The tubular body 1 shown in figure 1, which is preferably made of a transparent plastic material, comprises a cylindrical outer shell 2, which is internally provided with an inner shell 3 being integral with the shell 2, which inner shell 3 has a corrugated configuration. As a result of the corrugated configuration of the inner shell 3, guide surfaces 4 are formed, which guide surfaces extend in vertical direction in the vertical position of use of the tubular body 1 that is shown in figure 1. As will be apparent in particular from figure 2, said guide surfaces 4 include an angle, seen in cross-sectional view of the tubular body, with a line that envelopes the outer side of the tubular body. In the embodiment shown in figure 2, said enveloping line is formed by the outer circumference of the cylindrical tubular body 2. When the tubular body 1 is to be used, it is placed over a pot 5 containing a plant.

It is also conceivable, however, to use an embodiment in which the outer shell 2 is left out and the inner shell 3 is sufficiently rigid for effectively surrounding the plant with associated branches 6 and leaves (not shown in figure 1), which is contained in a pot 5. The enveloping line of the tubular body will in that case be formed by the line that surrounds the outer crests of the corrugated surface of the shell 3.

The upper edges of the shells 2 and/or 3 are preferably rounded so as to prevent the plant from being damaged.

As is indicated in figure 1, the guide surfaces 4 will train the branches 6 of the plant in upward direction and thus prevent said branches from becoming entangled with parts of an adjacent plant, which will preferably be surrounded by a tubular body 1 as well.

In figure 1 a cylindrical tubular body is shown, but it will also be conceivable to give the tub a slightly conical shape, whose diameter increases from the bottom upwards.

The tubular body may be open at the bottom side, so that air can flow upwards from the bottom through the tubular body when the tubular body is supported on grating. According to another possibility, one or more openings (not shown) may to that end be provided in the tubular body near the bottom side thereof. This may be desirable if the plant pot is supported on a closed surface and/or if the tubular body is closed at the bottom side.

The air circulation will also contribute towards an adequate drying of the plants, so that any fungoid growth can be prevented and less crop protection agents will be needed.

Also other embodiments of the tubular body according to the invention are conceivable, of course.

Thus, figure 3 shows an embodiment in which flat, rib-shaped guide surfaces 7 are provided on the inner side of the shell 2 of the tubular body, which ribs extend at least substantially parallel to the central axis or the longitudinal axis of the tubular body, extending in radial direction, seen in top plan view and in cross-sectional view, respectively, i.e. including an angle with the enveloping line formed by the outer circumference of the shell 2.

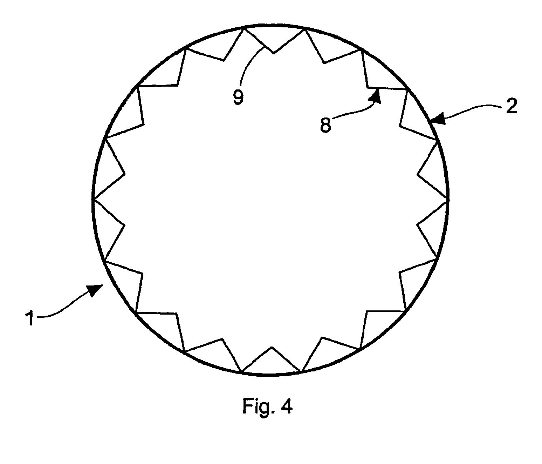

Another possible embodiment is shown in figure 4, in which an inner shell 8 being integral with the outer shell 2 is formed in the outer shell, which inner shell is made up of successive, mutually adjoining flat, rib-shaped guide surfaces 9 including an obtuse angle with each other, which extend at least substantially parallel to the longitudinal axis of the tubular body 1 and which, as will be apparent from figure 4, include an angle, seen in cross-sectional view of the tubular body, with a line that envelopes the outer side of the tubular body.

It will furthermore be understood that if a sufficiently rigid construction is used, such a shell 8, which is built up of guide surfaces 9 including an angle with each other, may also be configured without an outer shell 2. The enveloping line will in that case be formed by a line interconnecting the outer corner points of the shell 8.

The tubular bodies may have a sectional shape other than a cylindrical section, for example an oval section or a square section.

Furthermore, the tubular bodies may also be folded from a blank instead of being made in one piece.

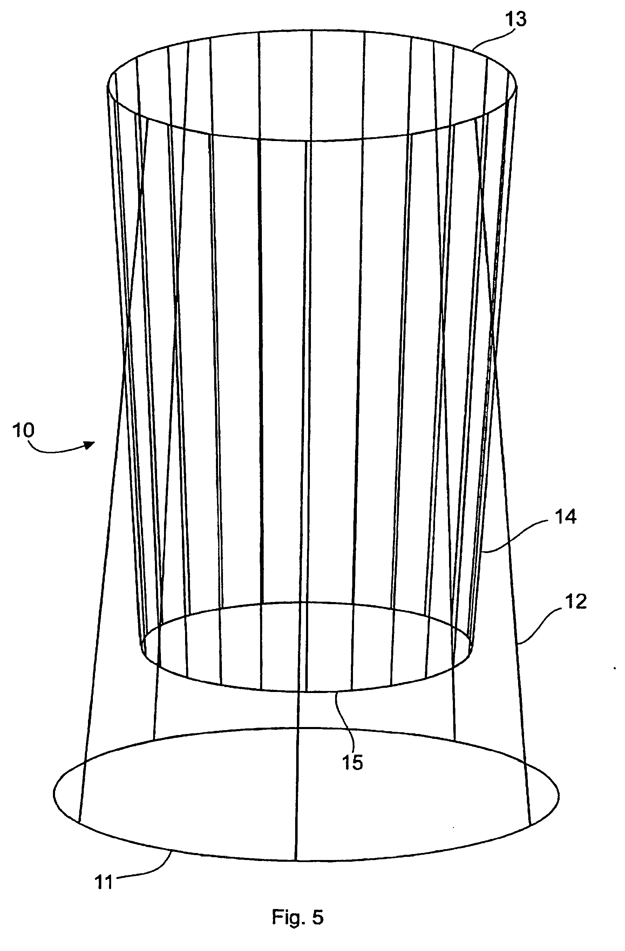

Figure 5 shows a container which is suitable for holding a tubular body according to the invention.

Said container 10, which is made of wire material, comprises a bottom ring 11 forming a support portion, which bottom ring is connected, by means of upwardly extending bars 12, to an upper ring 13. From said ring 13, wirelike bars 14 extend in downward direction, being connected at their bottom ends to a ring-shaped part 15, which is positioned some distance above the ring 11.

The bars 14 and the ring-shaped parts 13 and 15 interconnected by said bars form a holding part, in which or around which for example a folded or pleated sheet or tubular body having a shape corresponding to the shape of the above-described tubular bodies 1 can be placed together with a potted plant. It will be understood that it is possible in that case to achieve a similar effect with regard to the training of branches and the supporting of leaves of a plant as with the preceding embodiments. Such a sheet or tubular body may be removed after a certain period of growth, after which the plant in the container 10 can be further handled and possibly be sold while present in the container.

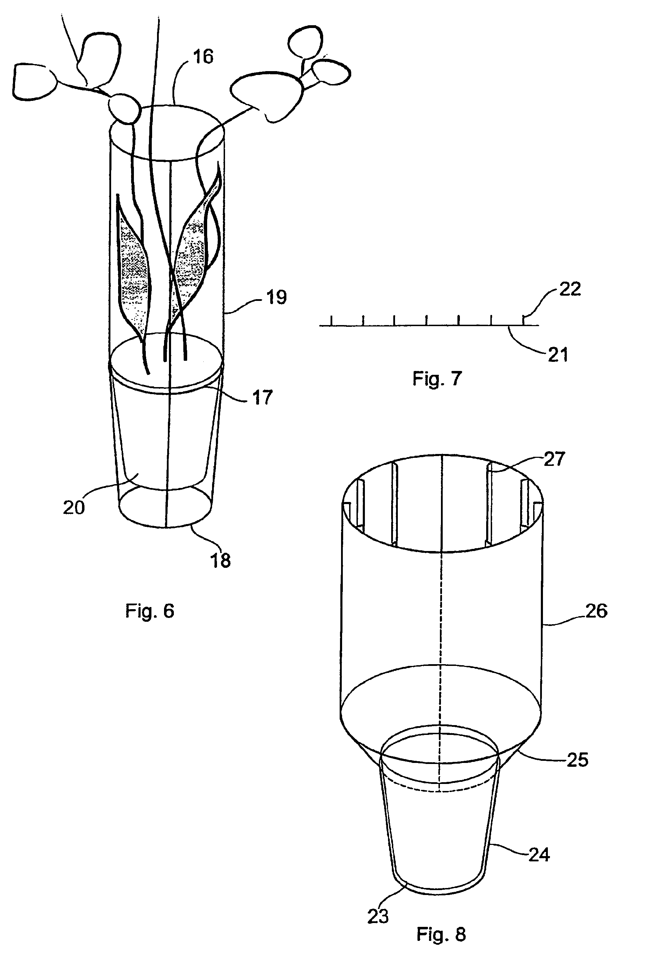

In the embodiment shown in figure 5, the holding part formed by the bars 14 and the ring-shaped parts 13 and 15 is slightly conical in shape, but it will be understood that said holding part may also have a substantially cylindrical shape, as for example shown in figure 6.

The container shown in figure 6 is built up of three ring-shaped parts 16-18 positioned one above the other, which are interconnected by vertically extending bars 19. The plant pot 20 can be supported by the central ring 17, in such a manner that the bottom of the pot is supported on a suitable position above the lower ring 18. This makes it possible to place a tray (not shown) under the pot 20 for collecting water.

A tubular body, for example folded from a sheetlike part 21 of plastic material, which is partially shown in sectional view in figure 7, can be placed in the container, above the pot. Said sheetlike part is provided with evenly spaced ribs 22 extending perpendicularly to said sheetlike part, which ribs will function as guide surfaces for the plant contained in the pot 20. The sheetlike part 21 can be folded into the shape of a tubular element and be inserted into the container 16-19.

Such a tubular element or sheetlike part can also be placed round the outer side of the container consisting of the parts 16-19, however. The tubular body may in that case be provided with a weakening line near the upper edge of the pot 20, said weakening line extending at least substantially parallel to the upper edge of the pot, so that the upper part of the tubular body can be easily removed from the lower part, whilst the lower part remains present around the lower part of the container supporting the pot for decoration purposes, after which the plant contained in the pot 20 can be sold together with the container holding the pot, for example, with the container providing adequate support for the branches of the plant.

Figure 8 schematically shows another possible embodiment of a tubular body, which is made up of a lower part 24 surrounding the plant pot 23, which is connected to the upper part 26 of the tubular body via a connecting portion 25, which diverges conically in upward direction, which upper part is provided with the guide means 27 on the inner side thereof. Holes may be provided in the conical portion for the passage of air.

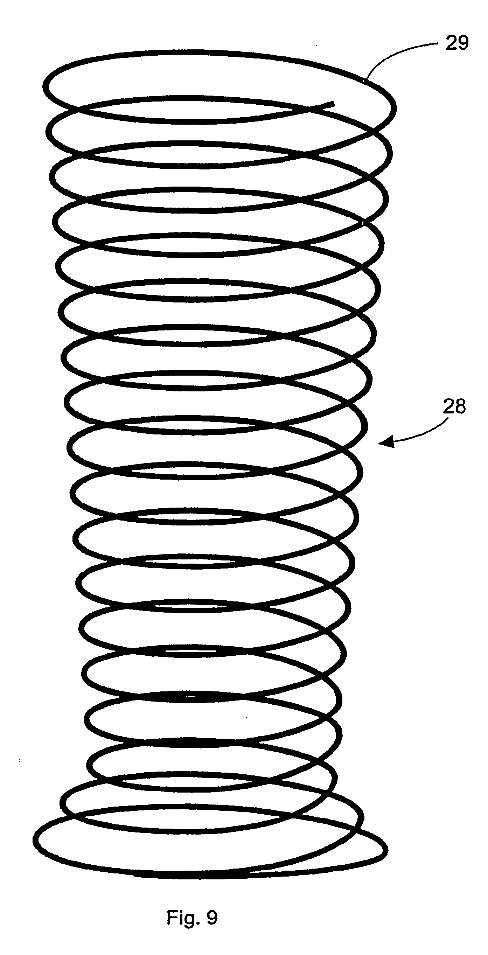

Figure 9 shows another embodiment of a container 28, which consists of a spirally wound wire 29. As will be apparent from figure 9, the wire is wound in such a manner that the container comprises a wide base part, whilst the remaining part slightly diverges in upward direction from said base part. In said container, a tubular body, for example a folded blank, can be placed for training the branch of the plant during its growth. Said blank may be removed again after some time, and the plant can be transported and/or be sold in said spiral body.

## Claims

1. A method for raising plants rooted in a ball of cultivating material, **characterised in that** a tubular body (1) is placed round the plant (6), the surface facing the plant of which tubular body (1) is provided with guide surfaces 4 along at least a part of its length, which guide surfaces (4) extend at least substantially in vertical direction in the position of use of the tubular body (1) and which, seen In cross-sectional view of the tubular body, include an angle with a line that envelopes the outer side of the tubular body.

2. A method according to claim 1, **characterised in that** said tubular body is placed over a pot containing said ball of cultivating material.

3. A method according to claim 1 or 2, **characterised in that** said tubular body is provided with mutually adjoining guide surfaces having a corrugated configuration, seen in cross-sectional view of the tubular body.

4. A method according to claim 1 or 2, **characterised In that** said tubular body is provided with flat, rib-shaped guide surfaces extending inwardly into the tubular body from the inner wall thereof, seen in cross-sectional view of the tubular body.

5. A method according to claim 4, **characterised in that** said tubular body is provided with rib-shaped guide surfaces including an angle with each other, seen in cross-sectional view.

6. A method according to claim 4, **characterised in that** said tubular body is provided with spaced-apart flat, rib-shaped guide surfaces extending inwardly Into the tubular body from the inner wall thereof, seen in cross-sectional view,

7. A method according to any one of the preceding claims, **characterised in that** means are provided for allowing an air flow from a location near the bottom side of the tubular body upwards through the interior of the tubular body.

8. A tubular body (1) for raising plants in a ball of cultivating material **characterised in that** the tubular body (1) is provided with guide surfaces (4) along at least part of its length, which guide surfaces (4) extend at least substantially parallel to the longitudinal axis of the tubular body (1) and which, seen in cross-sectional view of the tubular body (1), include an angle with a line that envelopes an outer side of the tubular body.

9. A tubular body according to claim 8, **characterised in that** said tubular body is provided with mutually adjoining guide surfaces, which, seen in cross-sectional view of the tubular body, have a corrugated configuration.

10. A tubular body according to claim 8, **characterised In that** said tubular body is provided with flat, rib-shaped guide surfaces extending Inwardly Into the tubular body from the inner wall thereof.

11. A tubular body according to claim 10, **characterised in that** said tubular body is provided with flat rib-shaped guide surfaces, which, seen in cross-sectional view, include an angle with each other in a connecting point.

12. A tubular body according to claim 10, **characterised in that** said tubular body is provided with spaced-apart flat, rib-shaped guide surfaces.

13. A tubular body according to claims 8-12, **characterised in that** said tubular body comprises a closed, seen in sectional view, outer wall and a profiled inner wall which is integral therewith.

14. A tubular body according to claim 8, **characterised in that** said tubular body comprises a closed, seen in sectional view, shell whose inner wall is provided with guide surfaces extending into the interior of the tubular body.

15. A tubular body according to claims 8-14, **characterised in that** said tubular body is provided with a weakening line extending transversely to Its longitudinal axis, such that said tubular body can be separated into two parts.

16. A tubular body according to claims 8-15, **characterised in that** said tubular body is folded form a sheetlike element.

17. A container (10) for a tubular body according to any one of the preceding claims 8-16 provided with a holding part for the tubular body, which holding part is built up of at least two ring-shaped parts (13, 15) positioned some vertical distance apart, which are Interconnected by bars (14) extending between said ring-shaped parts (13, 15).

18. A container according to claim 17, **characterised In that** the upper ring-shaped part of the holding part is connected to a support portion by means of bars, which support portion is positioned some distance below the lower ring-shaped part.

## Patentansprüche

1. Verfahren zum Ziehen von Pflanzen, die in einem Ballen aus Kultivierungsmaterial verwurzelt sind, **dadurch gekennzeichnet, dass** ein rohrförmiger Körper (1) um die Pflanze (6) herum angeordnet wird, wobei die der Pflanze zugewandte Fläche des rohrförmigen Körpers (1) entlang zumindest eines Teils seiner Länge mit Führungsflächen (4) versehen ist, welche Führungsflächen (4) in der Gebrauchsstellung des rohrförmigen Körpers (1) zumindest im Wesentlichen in Vertikalrichtung verlaufen und in Querschnittsansicht des rohrförmigen Körpers gesehen einen Winkel mit einer Linie einschließen, die die Außenseite des rohrförmigen Körpers umhüllt.

2. Verfahren nach Anspruch 1, **dadurch gekennzeichnet, dass** der rohrförmige Körper über einen Topf gestülpt wird, der den Ballen aus Kultivierungsmaterial enthält.

3. Verfahren nach Anspruch 1 oder 2, **dadurch gekennzeichnet, dass** der rohrförmige Körper mit aneinander angrenzenden Führungsflächen versehen ist, die in Querschnittsansicht des rohrförmigen Körpers gesehen eine wellige Gestalt haben.

4. Verfahren nach Anspruch 1 oder 2, **dadurch gekennzeichnet, dass** der rohrförmige Körper mit flachen, rippenförmigen Führungsflächen versehen ist, die sich in Querschnittsansicht des rohrförmigen Körpers gesehen von seiner Innenwand nach innen in den rohrförmigen Körper erstrecken.

5. Verfahren nach Anspruch 4, **dadurch gekennzeichnet, dass** der rohrförmige Körper mit rippenförmigen Führungsflächen versehen ist, die in Querschnittsansicht gesehen einen Winkel miteinander einschließen.

6. Verfahren nach Anspruch 4, **dadurch gekennzeichnet, dass** der rohrförmige Körper mit voneinander beabstandeten, flachen, rippenförmigen Führungsflächen versehen ist, die sich in Querschnittsansicht gesehen von seiner Innenwand nach innen in den rohrförmigen Körper erstrecken.

7. Verfahren nach einem der vorhergehenden Ansprüche, **dadurch gekennzeichnet, dass** Einrichtungen vorgesehen sind, um einen Luftstrom von einer Stelle nahe der Bodenseite des rohrförmigen Körpers durch das Innere des rohrförmigen Körpers nach oben zu ermöglichen.

8. Rohrförmiger Körper (1) zum Ziehen von Pflanzen in einem Ballen aus Kultivierungsmaterial, **dadurch gekennzeichnet, dass** der rohrförmige Körper (1) entlang zumindest eines Teils seiner Länge mit Führungsflächen (4) versehen ist, welche Führungsflächen (4) zumindest im Wesentlichen parallel zur Längsachse des rohrförmigen Körpers (1) verlaufen und in Querschnittsansicht des rohrförmigen Körpers (1) gesehen einen Winkel mit einer Linie einschließen, die eine Außenseite des rohrförmigen Körpers umhüllt.

9. Rohrförmiger Körper nach Anspruch 8, **dadurch gekennzeichnet, dass** der rohrförmige Körper mit aneinander angrenzenden Führungsflächen versehen ist, die in Querschnittsansicht des rohrförmigen Körpers gesehen eine wellige Gestalt haben.

10. Rohrförmiger Körper nach Anspruch 8, **dadurch gekennzeichnet, dass** der rohrförmige Körper mit flachen, rippenförmigen Führungsflächen versehen ist, die sich von seiner Innenwand nach innen in den rohrförmigen Körper erstrecken.

11. Rohrförmiger Körper nach Anspruch 10, **dadurch gekennzeichnet, dass** der rohrförmige Körper mit flachen, rippenförmigen Führungsflächen versehen ist, die in Querschnittsansicht gesehen an einem Verbindungspunkt einen Winkel miteinander einschließen.

12. Rohrförmiger Körper nach Anspruch 10, **dadurch gekennzeichnet, dass** der rohrförmige Körper mit voneinander beabstandeten, flachen, rippenförmigen Führungsflächen versehen ist.

13. Rohrförmiger Körper nach den Ansprüchen 8 bis 12, **dadurch gekennzeichnet, dass** der rohrförmige Körper in Schnittansicht gesehen eine geschlossene Außenwand und eine hiermit einstückige, profilierte Innenwand aufweist.

14. Rohrförmiger Körper nach Anspruch 8, **dadurch gekennzeichnet, dass** der rohrförmige Körper in Schnittansicht gesehen eine geschlossene Hülle aufweist, deren Innenwand mit Führungsflächen versehen ist, welche sich in das Innere des rohrförmigen Körpers erstrecken.

15. Rohrförmiger Körper nach den Ansprüchen 8 bis 14, **dadurch gekennzeichnet, dass** der rohrförmige Körper mit einer Schwächungslinie versehen ist, die sich quer zu seiner Längsachse erstreckt, so dass der rohrförmige Körper in zwei Teile geteilt werden kann.

16. Rohrförmiger Körper nach den Ansprüchen 8 bis 15, **dadurch gekennzeichnet, dass** der rohrförmige Körper aus einem bahnenartigen Element gefaltet ist.

17. Behälter (10) für einen rohrförmigen Körper nach einem der vorhergehenden Ansprüche 8 bis 16, der mit einem Halteteil für den rohrförmigen Körper versehen ist, welches Halteteil aus mindestens zwei ringförmigen Teilen (13, 15) aufgebaut ist, die um einen bestimmten vertikalen Abstand voneinander beabstandet angeordnet und durch Stäbe (14) miteinander verbunden sind, die sich zwischen den ringförmigen Teilen (13, 15) erstrecken.

18. Behälter nach Anspruch 17, **dadurch gekennzeichnet, dass** das obere ringförmige Teil des Halteteils mittels Stäben mit einem Stützabschnitt verbunden ist, welcher Stützabschnitt um einen bestimmten Abstand unterhalb des unteren ringförmigen Teils angeordnet ist.

## Revendications

1. Procédé pour cultiver des plantes enracinées dans une boule de matière de culture, **caractérisé en ce qu'**un corps tubulaire (1) est placé autour de la plante (6), la surface du corps tubulaire (1) tournée vers la plante étant munie de surfaces de guidage (4) le long d'au moins une partie de sa longueur, lesquelles surfaces de guidage (4) s'étendent au moins sensiblement dans une direction verticale dans la position d'utilisation du corps tubulaire (1) et qui, dans une vue en coupe du corps tubulaire, incluent un angle avec une droite qui enveloppe le côté externe du corps tubulaire.

2. Procédé selon la revendication 1, **caractérisé en ce que** ledit corps tubulaire est placé par-dessus un pot contenant ladite boule de matière de culture.

3. Procédé selon la revendication 1 ou 2, **caractérisé en ce que** ledit corps tubulaire est muni de surfaces de guidage mutuellement attenantes ayant une configuration ondulée, dans une vue en coupe du corps tubulaire.

4. Procédé selon la revendication 1 ou 2, **caractérisé en ce que** ledit corps tubulaire est muni de surfaces de guidage en forme de rainure plates s'étendant vers l'intérieur dans le corps tubulaire à partir de sa paroi interne, dans une vue en coupe du corps tubulaire.

5. Procédé selon la revendication 4, **caractérisé en ce que** ledit corps tubulaire est muni de surfaces de guidage en forme de rainure incluant un angle les unes par rapport aux autres, dans une vue en coupe.

6. Procédé selon la revendication 4, **caractérisé en ce que** ledit corps tubulaire est muni de surfaces de guidage en forme de rainure plates espacées s'étendant vers l'intérieur dans le corps tubulaire à partir de sa paroi interne, dans une vue en coupe.

7. Procédé selon l'une quelconque des revendications précédentes, **caractérisé en ce que** des moyens sont prévus pour permettre un écoulement d'air d'un emplacement proche du côté de fond du corps tubulaire vers le haut à travers l'intérieur du corps tubulaire.

8. Corps tubulaire (1) pour cultiver des plantes dans une boule de matière de culture, **caractérisé en ce que** le corps tubulaire (1) est muni de surfaces de guidage (4) suivant au moins une partie de sa longueur, lesquelles surfaces de guidage (4) s'étendent au moins sensiblement parallèlement à l'axe longitudinal du corps tubulaire (1) et qui, dans une vue en coupe du corps tubulaire (1), incluent un angle avec une droite qui enveloppe un côté externe du corps tubulaire.

9. Corps tubulaire selon la revendication 8, **caractérisé en ce que** ledit corps tubulaire est muni de surfaces de guidage mutuellement attenantes qui, dans une vue en coupe du corps tubulaire, présentent une configuration ondulée.

10. Corps tubulaire selon la revendication 8, **caractérisé en ce que** ledit corps tubulaire est muni de surfaces de guidage en forme de rainure plates s'étendant vers l'intérieur dans le corps tubulaire à partir de sa paroi interne.

11. Corps tubulaire selon la revendication 10, **caractérisé en ce que** ledit corps tubulaire est muni de surfaces de guidage en forme de rainure plates, qui, dans une vue en coupe, incluent un angle les unes par rapport aux autres dans un point de jonction.

12. Corps tubulaire selon la revendication 10, **caractérisé en ce que** ledit corps tubulaire est muni de surfaces de guidage en forme de rainure plates espacées.

13. Corps tubulaire selon les revendications 8 à 12, **caractérisé en ce que** ledit corps tubulaire comprend une paroi externe, en vue en coupe, fermée et une paroi interne profilée qui est solidaire de celle-ci.

14. Corps tubulaire selon la revendication 8, **caractérisé en ce que** ledit corps tubulaire comprend une coque, en vue en coupe, fermée, dont la paroi interne est munie de surfaces de guidage s'étendant à l'intérieur du corps tubulaire.

15. Corps tubulaire selon les revendications 8 à 14, **caractérisé en ce que** ledit corps tubulaire est muni d'une droite d'affaiblissement s'étendant transversalement à son axe longitudinal, de sorte que ledit corps tubulaire peut être séparé en deux parties.

16. Corps tubulaire selon les revendications 8 à 15, **caractérisé en ce que** ledit corps tubulaire est plié pour former un élément en feuille.

17. Récipient (10) pour un corps tubulaire selon l'une quelconque des revendications 8 à 16, muni d'une partie de maintien pour le corps tubulaire, laquelle partie de maintien est composée d'au moins deux parties annulaires (13, 15) positionnées à une certaine distance verticale l'une de l'autre, qui sont raccordées entre elles par des barres (14) s'étendant entre lesdites parties annulaires (13, 15).

18. Récipient selon la revendication 17, **caractérisé en ce que** la partie annulaire supérieure de la partie de maintien est raccordée à une portion de support au moyen de barres, laquelle portion de support est positionnée à une certaine distance en dessous de la partie annulaire inférieure.
